(19) **Europäisches Patentamt / European Patent Office / Office européen des brevets**

(11) **EP 4 461 455 A1**

(12) **EUROPEAN PATENT APPLICATION**
published in accordance with Art. 153(4) EPC

(43) Date of publication:
**13.11.2024 Bulletin 2024/46**

(21) Application number: **22926035.1**

(22) Date of filing: **06.10.2022**

(51) International Patent Classification (IPC):
**B23K 26/21** (2014.01)      **B23K 26/082** (2014.01)
**B23K 26/342** (2014.01)

(52) Cooperative Patent Classification (CPC):
**B23K 26/082; B23K 26/21; B23K 26/342**

(86) International application number:
**PCT/JP2022/037432**

(87) International publication number:
**WO 2023/153018 (17.08.2023 Gazette 2023/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.02.2022 JP 2022020100**

(71) Applicant: **JFE Steel Corporation**
**Tokyo 100-0011 (JP)**

(72) Inventors:
- **HARA, Asato**
  **Tokyo 100-0011 (JP)**
- **TAKASHIMA, Katsutoshi**
  **Tokyo 100-0011 (JP)**

(74) Representative: **Grünecker Patent- und Rechtsanwälte PartG mbB Leopoldstraße 4 80802 München (DE)**

(54) **LASER BEAM WELDING METHOD, WELDING MACHINE FOR SAME, AND BUTT WELDED JOINT**

(57)      Proposed is a laser beam welding method including irradiating a gap between butted steel sheets with a laser beam while supplying a filler to the gap so as to cause butted portions of the steel sheets and the filler to melt and solidify, and thus form a weld metal, thereby melting and joining the butted steel sheets. The method makes it possible to stably obtain a high-quality laser butt-welded joint by delivering the laser beam while rotating it across the gap between the steel sheets and by controlling the ratio of the amount of the filler supplied to the gap per unit time to the volume of the gap between the steel sheets to be welded per unit time to be within a predetermined range, even if the width of the gap between the butted steel sheets is large or if the width of the gap varies in the sheet width direction. Also provided are a welding machine used for the method and a weld joint obtained with the method.

FIG. 3(a)

FIG. 3(b)

## Description

Technical Field

The present invention relates to a laser beam welding method used for butt-welding steel sheets, a welding machine used for the method, and a butt-welded joint obtained by the method.

Background Art

In the recent production of steel products such as steel sheets, steel sheets rolled up into coils are continuously processed while being unwound in a production line including a pickling line, a cold rolling line, an annealing line, or a refining line, from the viewpoint of improving product quality as well as productivity. In the continuous processing line where the steel sheet rolled up into a coil is continuously processed as it is unwound, the rear end of the preceding steel sheet coil and the front end of the following steel sheet coil are required to be joined together by some method at the entry side of the line.

Flash butt welding has been widely used as the above joining method. Meanwhile, to join brittle steel sheets containing a large amount of alloy components, laser welding or other methods have been mainly used. In the laser welding, the rear end of the preceding steel sheet and the front end of the following steel sheet are cut by a shearing machine installed in a welding machine to improve the accuracy of the end faces to be welded, and then the end portions are butted against each other and welded. At this time, the width of the gap between the butted steel sheets is typically set to approximately 1/10 or less of the steel sheet thickness.

However, when the above steel sheets are subjected to a cutting process, it is difficult to cut them completely straight. In addition, since a shear drop, burr, etc. is formed on the cut end faces, it is impossible to reduce the width of the gap between the butted steel sheets to 0 (zero), no matter how much the cutting accuracy is increased. The width of the gap between the steel sheets in the sheet width direction may vary due to variations in the butting conditions for the steel sheets, for example. In response to the above problems, a technology has been proposed to minimize the gap between the butted steel sheets by inverting the surfaces of one of the steel sheets to be butted over (for example, see Patent Literature 1). Meanwhile, welding is performed by supplying filler material (filler) to the gap between the steel sheets and melting the filler together with the steel sheets to form a weld metal (for example, see Patent Literatures 2 and 3).

In steel sheet welding, a laser beam with an output of 10 kW or less and a beam diameter of about 0.4 to 0.6 mm is typically used. Therefore, it is not easy to accurately direct the laser beam to the weld. In response to this, the laser beam is delivered to the weld while it is weaving so as to cross the butted portion of the steel sheets (for example, see Patent Literatures 4 to 7).

Citation List

Patent Literature

Patent Literature 1: Japanese Patent Laid-Open No. 2001-205432
Patent Literature 2: Japanese Patent Laid-Open No. 03-133587
Patent Literature 3: Japanese Patent Laid-Open No. 08-290281
Patent Literature 4: Japanese Patent Laid-Open No. 2014-205166
Patent Literature 5: Japanese Patent Laid-Open No. 2019-171425
Patent Literature 6: International Publication No. WO 2020/179029
Patent Literature 7: Japanese Patent Laid-Open No. 2003-170284

Summary of Invention

Technical Problem

The technologies in Patent Literatures 4 to 6 disclose the weaving of a laser beam but do not involve the supply of filler to the weld. Therefore, they cannot be applied to a case where filler is supplied. Patent Literature 7 discloses a technology of supplying filler to the weld and also of weaving a laser beam. However, it is difficult to stably obtain a weld joint with excellent mechanical strength when the width of the gap between the butted steel sheets is large, when the welding rate varies, or when the width of the gap varies in the sheet width direction, for example, which is problematic.

The present invention has been made in view of the above problems of the conventional technologies, and aims to provide a laser beam welding method that, when butt-welding steel sheets together using a laser, can stably obtain a high-quality butt-welded joint, even when the width of the gap between the butted steel sheets is large or when the width of the gap varies in the sheet width direction. Further, another object of the present invention is to provide a laser beam welding machine used for the method, and a weld joint obtained by the method.

Solution to Problem

To address the above problems, the inventors have conducted intensive studies by focusing on the filler supply conditions and the laser beam irradiation conditions. As a result, when butt welding is performed by irradiating the butted portion of the butted steel sheets with a laser beam, the amount of filler supplied to the gap between the steel sheets is controlled to an appropriate range. Specifically, a detector for detecting the width of the gap between the steel sheets in front of the welding point (the laser beam irradiation position) is installed, and the detector and a filler supply device are operated in conjunction with each other so that the supply amount of the filler can be controlled to an appropriate range in accordance with the width of the gap detected by the detector. Further, based on the position of the gap detected by the detector, the laser beam is delivered to the weld widely and uniformly while being rotated so as to cross (straddle) the gap where the filler is supplied. Accordingly, the inventors have found that the above findings can not only fully address the variation in the width of the gap between the steel sheets but also reduce the amount of sputters generated on the resulting weld bead portion, so that a high-quality butt-welded joint can be stably obtained.

The present invention based on the above findings proposes a laser beam welding method including irradiating a gap between butted steel sheets with a laser beam while supplying filler to the gap, causing the butted portion of the steel sheets and the filler to melt and solidify, forming a weld metal, and thereby melting and joining the butted steel sheets. The method is characterized by delivering the laser beam while rotating the laser beam so as to cross the gap between the steel sheets and controlling an amount of the filler supplied to the gap per unit time such that the amount is in a predetermined range with respect to a volume of a gap between the steel sheets to be welded per unit time.

The above laser beam welding method of the present invention is characterized by performing welding so as to satisfy all of the following conditions (1) to (6) and thereby forming the weld metal that satisfies the following conditions (7) and (8):

$$(1)\ 0.4 \le t \le 10.0,$$

$$(2)\ 0.80 \le v \le 8.0,$$

$$(3)\ 0 < a \le 1.0,$$

$$(4)\ 50 \le f \le 400,$$

$$(5)\ 0 < p \le 70,$$

$$(6)\ 1.0 \le V/g \le 4.0,$$

$$(7)\ 0.80 \le h/t \le 1.20,$$

and

$$(8)\ 0.2 \le w \le 3.0,$$

where t represents a thickness (mm) of each steel sheet, v represents a welding velocity (m/min), a represents a rotation width (mm) of the laser beam, f represents a rotation frequency (Hz) of the laser beam, p represents a flattening (%) of a circle drawn by the laser beam while the laser beam is rotated, V represents the supply amount ($mm^3$/min) of the filler per unit time, g represents the volume ($mm^3$/min) of the gap between the steel sheets to be welded per unit time, h represents a thickness (mm) of a central portion of a weld, and w represents a minimum melting width (mm) in a thickness direction of a weld.

The present invention also proposes a laser beam welding machine for melting and joining butted steel sheets, including a laser oscillator that oscillates a laser beam; a transmission system that transmits the laser beam; a working head that delivers the laser beam while rotating the laser beam to cross a gap between the steel sheets; a filler supply device that supplies filler to the gap; a detector that detects a butting position of the butted steel sheet, and a width of a gap between the steel sheets; and a control unit that controls an amount of the filler to be supplied from the filler supply device to the gap between the steel sheets. The laser beam welding machine is characterized in that the control unit has a function for controlling the amount of the filler supplied from the filler supply device such that the amount falls within a predetermined range in accordance with the volume of the gap between the steel sheets to be welded per unit time that has been calculated from a welding velocity and from the width of the gap detected by the detector.

The present invention also proposes a laser-beam butt-welded joint of steel sheets each having a thickness of 0.4 to 10.0 mm, wherein a weld of the laser-beam butt-welded joint has a weld metal including the steel sheets and filler, and a thickness h of a central portion in a width direction of the weld metal and a minimum melting width w in a thickness direction of the weld metal satisfy the following conditions (7) and (8), respectively:

$$(7)\ 0.80 \le h/t \le 1.20,$$

and

$$(8)\ 0.2 \le w \le 3.0$$

Advantageous Effects of Invention

According to the present invention, in which steel sheets are butt-welded by laser beam welding, both the amount of the filler to be supplied to the weld and the laser beam irradiation conditions are optimized, so that a weld joint that is excellent not only in appearance but also in strength properties can be stably obtained. Thus, by applying the technology of the present invention to a continuous processing line for steel sheets, not only the time required for rewelding due to welding failures but also fractures in the line can be reduced, thus contributing to improved productivity. Further, the invention has another advantageous effect of reducing the amount of the filler supplied to the weld.

Brief Description of Drawings

FIG. 1 is a view illustrating an example of a welding machine and a welding method used for the laser beam butt welding of the present invention.
FIG. 2 is a view illustrating the internal structure of a working head and the weaving principle of a laser beam.
FIG. 3 is a view illustrating the laser beam irradiation trajectory of the present invention.
FIG. 4 is a view illustrating the width G of the gap between butted steel sheets.
FIG. 5 is a schematic view of a cross-section of a weld obtained by laser beam welding.

Description of Embodiments

First, a laser beam welding method and a welding machine used for butt-welding steel sheets according to the present invention will be described with reference to the drawings.

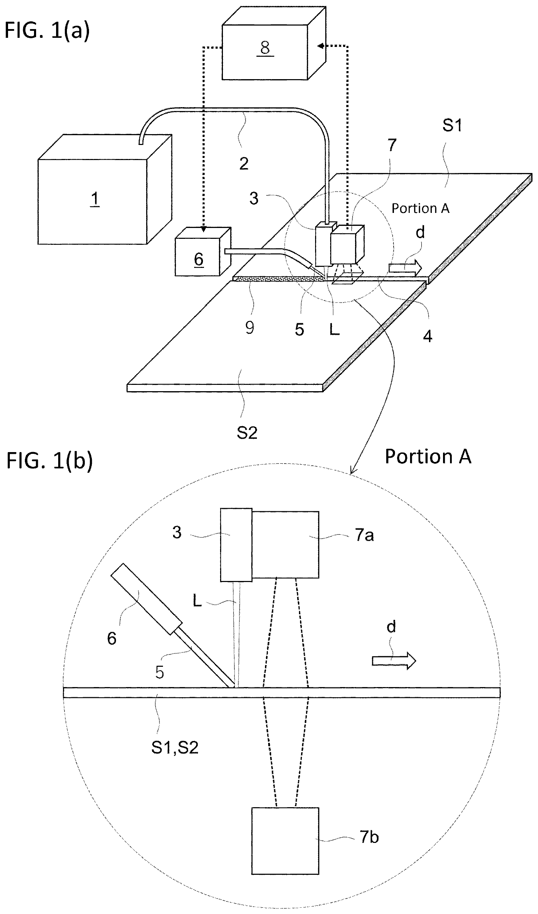

FIG. 1(a) and 1(b) are views illustrating an example of an overview of the laser beam welding machine and welding method of the present invention for melting and joining two butted steel sheets S1 and S2. FIG. 1(a) is an overall view, and FIG. 1(b) is an enlarged view of a portion A in FIG. 1(a). The welding machine includes a laser oscillator 1 that oscillates a laser beam L, a transmission system 2 that transmits the laser beam L, a working head 3 that irradiates a gap 4 between the butted steel sheets with the laser beam L, a filler supply device 6 that supplies a filler 5 to the gap 4 between the steel sheets, a detector 7 that detects the butting position of the butted steel sheets and the width G of the gap, and a control unit 8 that controls the amount of the filler 5 supplied to the gap 4 between the steel sheets from the filler supply device 6. The steel sheets around the butted portions and the filler 5 supplied to the gap 4 between the steel sheets are melted and solidified by the laser beam L delivered from the working head 3, forming a weld (weld metal) 9.

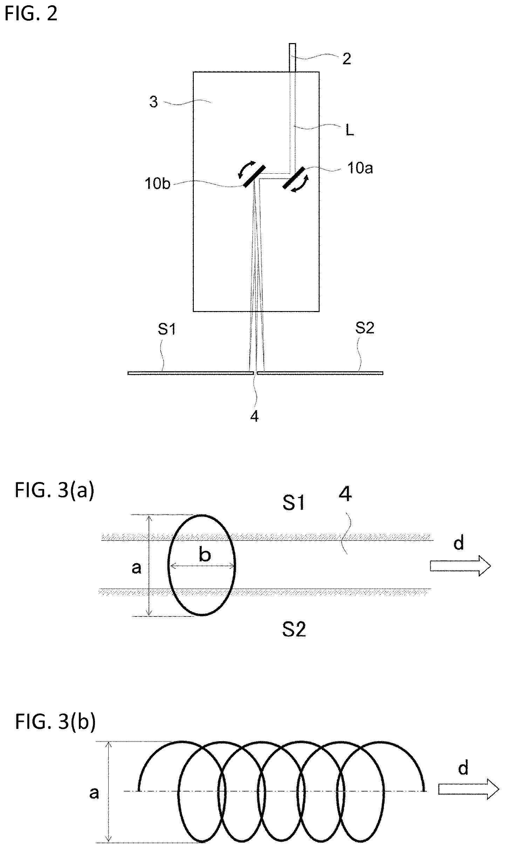

The working head 3 includes a plurality of mirrors 10a and 10b as shown in FIG. 2. As the mirrors operate in conjunction with each other, the laser beam L is delivered while rotating to draw an arc across the gap 4 between the butted steel sheets as shown in FIG. 3(a). The working head 3 moves in a welding direction d, or the steel sheets move in a direction opposite to the welding direction d during welding, so that the trajectory of the laser beam delivered to the weld becomes spiral as shown in FIG. 3(b).

The control unit 8, which controls the supply amount of the filler, calculates the volume V of the gap between the steel sheets to be welded per unit time and the supply amount g of the filler (amount of the filler supplied from the filler supply device per unit time) that is a predetermined multiple of the volume of the gap, based on the width G of the gap 4 between the steel sheets in front of of the welding point (laser beam irradiation position) measured by the detector 7 and the welding velocity v at that time. Then, the control unit 8 transmits the calculation results to the filler supply device 6, so that the results are reflected in the supply rate of the filler 5.

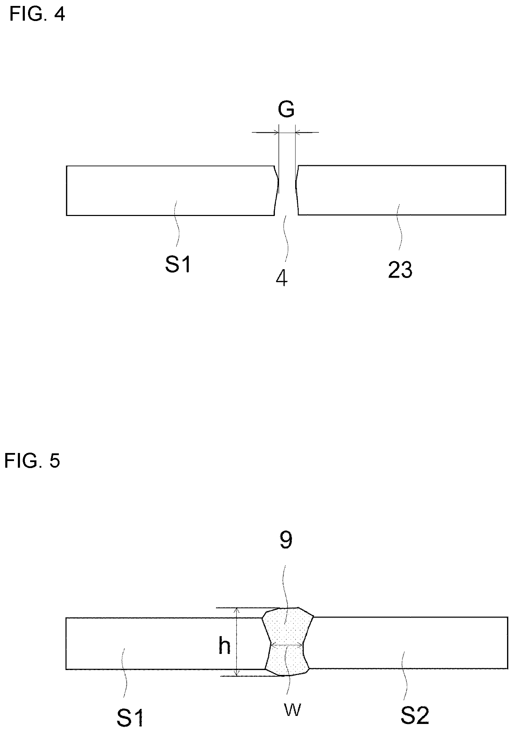

As shown in FIG. 4, the width G of the gap between the butted steel sheets of the present invention is defined as the minimum gap between the tip ends of the end faces of the two butted steel sheets. FIG. 1(b) shows an example in which the detector 7 for detecting the width of the gap, which includes a laser irradiation unit 7a and a laser receiving unit 7b that receives a transmitted laser beam, is disposed above and below the steel sheets as a detector that measures the width G of the gap 4 between the steel sheets. However, it is not always necessary to dispose the detector above and below the steel sheets, as long as it can accurately measure the width G of the gap 4.

Next, a butt-welded joint of the present invention obtained by using the laser beam welding machine and laser beam welding method will be described.

The butt-welded joint of the present invention is required to satisfy conditions (1), (7), and (8) described below.

$$(1)\ 0.4 \leq t \leq 10.0$$

The thickness t (mm) of each of the steel sheets that form the butt-welded joint of the present invention is preferably in the range of 0.4 to 10.0 mm which allows laser beam welding. When the thickness t is less than 0.4 mm, burn through may occur during welding, and defects such as penetration may be caused. Therefore, it is necessary to reduce the laser beam output, resulting in reduced productivity. Meanwhile, when the thickness t is more than 10.0 mm, the input heat energy is insufficient at a laser beam output of approximately 10 kW or less, which is commonly used for laser beam welding. As a result, the minimum melting width w in the thickness direction of the resulting weld metal, which will be described below, cannot be obtained, and it becomes inevitable to reduce the welding velocity. This makes it impossible to achieve high-speed welding, which is an advantage of the present invention. The more preferable range of the thickness is 1.0 to 4.0 mm.

(7) h/t: 0.80 to 1.20

FIG. 5 is a schematic view showing a cross section of the weld of the butt-welded joint, in which weld metal 9 is formed between the butted steel sheets by melting and mixing the steel sheets and the filler. The ratio (h/t) of the thickness h (mm) of the central portion in the width direction of the weld metal 9 to the thickness t (mm) of the butted steel sheets is preferably in the range of 0.80 to 1.20. When the value of h/t is less than 0.80, the resulting weld bead (weld metal) will be in an excessively underfilled state (a state in which the weld metal is recessed), causing stress concentration. As a result, sufficient strength cannot be achieved. Meanwhile, when the value of h/t is more than 1.20, the difference in level between the weld metal and each steel sheet as the base metal will become too large. This results in stress being concentrated in the boundary portion between each steel sheet and the weld metal and a sheet fracture being caused when the sheets are cold rolled after welding, for example, which is unfavorable. The more preferable range of the hit value is 0.9 to 1.1. Note that when the two butted steel sheets S1 and S2 have different thicknesses, the thickness t corresponds to the average thickness of the two steel sheets.

(8) Minimum melting width w in the thickness direction of the weld metal: 0.2 to 3.0 mm

In the butt-welded joint of the present invention, the minimum melting width w (mm) in the thickness direction of the weld metal shown in FIG. 5 is required to fall within in the range of 0.2 to 3.0 mm. When the minimum melting width w is less than 0.2 mm, sufficient strength of the butt joint cannot be achieved due to the insufficient melting of the weld metal. Conversely, when the minimum melting width w is more than 3.0 mm, burn-through of the weld metal will occur, with the result that the above h/t value cannot be achieved, or a defect will occur. The preferable range of the minimum melting width w (mm) is 0.6 to 2.0 mm.

Next, to obtain the butt-welded joint of the present invention with the properties (7) and (8) using the laser beam welding machine of the present invention described above, it is necessary to perform butt welding while satisfying all of the following conditions (2) to (6) in addition to (1) described above.

(2) Welding velocity v: 0.80 to 8.0 m/min

As described above, the butt-welded joint of the present invention is obtained by butting two steel sheets each having a thickness of 0.4 to 10.0 mm and subjecting them to laser beam welding. The welding velocity v of the laser beam welding is required to be set in the range of 0.80 to 8.0 m/min.

When the welding velocity v is less than 0.8.0 m/min, the input heat energy per unit length of the welding will be excessive, causing burn-through. As a result, sufficient joint strength may not be achieved, which is unfavorable. Meanwhile, when the welding velocity v is more than 8.0 m/min, the input heat energy per unit length of the welding will be insufficient, causing insufficient weld penetration. As a result, the minimum melting width w of the weld metal cannot be achieved. The preferable range of the welding velocity v is 1.5 to 5.0 m/min.

(3) Rotation width a: more than 0 mm but 1.0 mm or less

The laser beam welding of the present invention is characterized by being performed such that a laser beam is delivered while being rotated (weaved) to draw an arc by crossing (striding across) the gap between the steel sheets to be welded, as shown in FIG. 3 and that the filler supplied to the gap and the steel sheets around the gap are melted and solidified to form a weld (weld metal). The width (rotation width) a of the laser beam when it draws an arc is required to be larger than the width G of the gap between the butted steel sheets while satisfying more than 0 mm but 1.0 mm or less. Note that the rotation width a is the distance between the centers of the laser beam diameter.

Provided that the rotation width a is 0 mm (when no arc is drawn), when the laser beam diameter is 0.5 mm, for example, it is possible to irradiate a 0.5 mm-wide area with the laser beam. However, considering a gap to be formed between the butted steel sheets, the steel sheets may not be partially melted. In addition, when the rotation width a is 0 mm, the steel sheets may not be partially welded if the laser beam irradiation position has deviated even by a small amount. Thus, the rotation width a should be more than 0 mm. Meanwhile, the larger the rotation width a, the more advantageous to the variation in the gap between the butted portion. However, as the irradiation range increases, the input energy per unit decreases, so that a decrease in the welding velocity is unavoidable. Further, since melting occurs over a wide range, burn-through is more likely to happen. Accordingly, the upper limit of the rotation width a should be 1.0 mm from the viewpoint of achieving high-speed welding. The preferable range of the rotation width a is 0.2 to 0.6 mm.

(4) Rotation frequency f: 50 to 400 Hz

The rotation velocity (rotation frequency f) of a laser beam when it rotates while drawing an arc is required to be set in the range of 50 to 400 Hz.

If the rotation frequency f is less than 50 Hz, the frequency f is small with respect to the welding velocity v. As a result, the adjacent laser beam irradiation trajectories do not overlap in some areas, causing welding defects at regular intervals. Meanwhile, a laser beam with a higher rotation frequency f can heat the surfaces of the steel sheets more uniformly, which can increase the smoothing effect of the surface of a bead formed on the resulting weld. However, when considering a portion irradiated with a laser beam, as the rotation frequency is higher, the laser beam scanning velocity becomes higher, reducing the irradiation time and the input energy per unit area. Therefore, it is necessary to increase the laser beam output in order to achieve a high welding velocity. Meanwhile, if the laser beam output is increased too much, sputters will abruptly occurs on the bead surface irradiated with the laser beam, causing the bead surface to become rough. Therefore, the upper limit of the rotation frequency should be 400 Hz. The preferable range of the rotation frequency f is 100 to 200 Hz.

(5) Flattening p: more than 0% but 70% or less

The laser beam welding of the present invention is characterized in that, as shown in FIG. 3, the weld is irradiated with a laser beam by rotating the laser beam to draw an arc. The arc is required to be drawn such that the flattening p of a circle drawn when the working head 3 is stopped is in the range of more than 0% but 70% or less. Specifically, provided that the ratio (b/a × 100(%)) of the width b of the circle in the welding direction to the width (rotation width a) of the circle in a direction perpendicular to the welding direction of the circle drawn at the stop of the working head 3 is defined as the flattening p, the flattening p is required to fall within the range of more than 0% but 70% or less.

When the flattening p is 0 (when the laser beam irradiation trajectory is a straight line in a direction perpendicular to the welding direction while the working head 3 is stopped), the laser beam irradiation trajectory becomes a wave-like state. In such a case, unmelted portions occur at regular intervals at both width ends where the weaving width is the maximum, which may cause welding defects. However, when the laser beam irradiation is performed by setting the flattening p to more than 0 so that a laser beam is rotated to draw an arc, the generation of such unmelted portions is addressed. Meanwhile, when the flattening p is 0, the scalar difference between the total velocity vector of the scanning velocity vector and the welding velocity vector when the laser beam passes through the central part of the gap (weld line) between the steel sheets, and the total velocity vector of the scanning velocity vector and the welding velocity vector when the amplitude of the laser beam is the maximum becomes large. As a result, a difference occurs in the amount of the input heat energy at the two positions, with the result that the steel sheets cannot be heated uniformly. Meanwhile, when the laser beam irradiation is performed by setting the flattening p to more than 0 so that a laser beam is rotated to draw an arc, the scalar difference between the total velocity vectors at the two positions becomes small. Thus, the steel sheets can be heated uniformly. However, if the flattening p is set too high, such as over 70%, the laser beam scanning velocity will increase, and the irradiation time per unit area will be reduced as in the case of increasing the rotation frequency f. Consequently, it becomes necessary to increase the laser output and achieve a sufficient weld penetration depth. In such a case, the amount of sputters generated on the bead surface will increase abruptly, and the bead surface will become rough. Accordingly, the flattening p is limited to more than 0% but 70% or less. The preferable range of the flattening p is 30 to 50%.

(6) V/g: 1.0 to 4.0

When the filler is supplied to the gap between the butted steel sheets in the butt welding of steel sheets, it is necessary to set the supply amount V (mm$^3$/min) of the filler per unit time to 1.0 to 4.0 times the volume g (mm$^3$/min) of the gap to be welded per unit time. If V/g is less than 1.0, the amount of the filler supplied to the gap will be too small, so that the resulting bead (weld metal) will be in an underfilled state, and $h/t \geq 0.80$ cannot be achieved. Thus, sufficient welding strength cannot be achieved. Meanwhile, when V/g is more than 4.0, the resulting bead will be raised above the level of the steel sheets, so that stress will be concentrated at the boundary portion between each steel sheet and the weld metal, reducing workability. Further, since the heat energy required to melt the filler also increases, the welding velocity needs to be reduced or the laser output is required to be increased. The preferable range of V/g is 1.5 to 2.5.

Note that the steel sheets to which the laser beam welding method and the welding machine of the present invention can be applied are not limited to particular steel sheets. Thus, the laser beam welding method and the welding machine of the present invention can be applied to any steel sheet of 270 to 440 MPa class having a thickness of 0.4 to 10.0 mm. In addition, the filler supplied to the gap between the steel sheets during welding may be any filler that is commonly used for the welding of the steel sheets, and is not limited to a particular filler.

The laser beam welding technology of the present invention is applicable to all technical fields related to the joining of steel sheets. In particular, the laser beam welding technology of the present invention can be suitably used for a continuous processing line for continuously processing steel sheets involving welding the rear end of the preceding steel sheet coil and the front end of the following steel sheet coil together on the entry side of the line.

Example

Test specimens each having a sheet width of 1000 mm and a length of 1500 mm were taken from a 270 to 440 MPa class steel sheet raw material containing C: 0.02 to 0.15 mass%, Si: 0.01 to 0.8 mass%, Mn: 0.2 to 1.5 mass%, P: 0.01 to 0.03 mass%, S: 0.002 to 0.006 mass%, Al: 0.01 to 0.03 mass%, N: 0.01 to 0.06 mass%, Cr: 0.01 to 0.04 mass%, Ni: 0.001 to 0.01 mass%, and Cu: 0.001 to 0.01 mass%, with the balance being Fe and unavoidable impurities, having a thickness of 0.3 mm, 0.6 mm, 1.6 mm, 2.3 mm, 3.2 mm, 4.5 mm, 6.4 mm, 8.0 mm, or 10.8 mm. Next, an experiment for producing a weld joint was conducted by butt-welding each test specimen using the laser beam welding machine and the laser beam welding method shown in FIG. 1. A fiber laser with a maximum output of 10 kW was used for the laser beam welding. The butt welding conditions such as steel sheet thickness t, width G of the gap between the steel sheets, laser output W, welding velocity v, rotation width a of the laser beam, rotation frequency f, flattening p, and filler supply amount V were varied as shown in Tables 1. Note that a solid wire for MAG welding defined by YGW 12 of JIS Z 3312 with a diameter of 0.9 mmφ was used as the filler supplied to the gap between the steel sheets to be welded, and the filler supply rate was controlled to thus vary the filler supply amount V per unit time.

The-thus obtained weld joint was evaluated as follows.

<Observation of cross section of weld >

The cross-sectional structure of a weld metal was observed for three portions, which include the welding start portion, the welding central portion in the longitudinal direction, and the welding end portion, of the produced weld joint. The thickness h of the central portion in the width direction of the weld metal, and the minimum melting width w in the thickness direction of the weld metal shown in FIG. 5 were measured.

<Tensile test>

Tensile tests were conducted on tensile test specimens defined by JIS Z 2241 (those with a thickness t of 0.3 to 3 mm were JIS No. 5 test specimens, and those with a thickness t of more than 3 mm were JIS No. 14B test specimens). Three test specimens were taken for each size from the central portion in the longitudinal direction of the weld line of the produced weld joint. At this time, each tensile test specimen was taken such that the weld was positioned in the central portion in the longitudinal direction of a parallel portion. As a result, the test specimens were evaluated as acceptable (Good) if all of the three tensile test specimens had fractured at their base metals, and were evaluated as not acceptable (Poor) if at least one of the tensile test specimens had fractured at its weld.

<Bulging test>

A disc-shaped test specimen with a diameter of 90 mmφ was taken from each of three portions including the welding start portion, welding central portion, and welding end portion of the weld joint. Then, a bulging test was conducted on each test specimen using a ball head punch by simulating an Erichsen test. As a result, the test specimens were evaluated as acceptable (Good) if all of the three test specimens had fractured at portions other than their weld metal, and were evaluated as not acceptable (Poor) if at least one of the test specimens had fractured at its weld metal or along the boundary portion between its weld metal and one of the steel sheets as the base metal.

Tables 1 also show the results of the evaluation tests.

As seen from Tables 1, the weld joints of Invention Examples Nos. 2, 5, 14 to 16, 21, 26, 31, and 37, which satisfy the conditions of the present invention, all have the h/t values of 0.80 to 1.20 and the minimum melting width of the weld metal in the range of 0.2 to 3.0 mm. Therefore, both results of the tensile test and the bulging test are also evaluated acceptable.

In contrast, in the weld joints of Comparative Examples, at least one of the h/t value and the minimum melting width w of the weld metal does not satisfy the condition of the present invention, resulting fractures at its weld in the tensile test, and along the boundary between its weld metal and steel sheets in the bulging test.

For example, the weld joint of No. 1 was too thin and suffered from burn-through. As a result, the h/t value was less than 0.80, and the minimum melting width w was as small as 0.1 mm. In contrast, the weld joint of No. 4 had a large thickness and thus experienced insufficient input heat energy at a laser output of 10 kW. As a result, the minimum melting width w fell below 0.2 mm.

The weld joint of No. 3, which had an extremely high welding velocity, experienced insufficient input heat energy per unit area. As a result, the minimum melting width w was as small as 0.1 mm. In contrast, the weld joint of No. 36, with the welding velocity below the range of the present invention, exhibited a low h/t value.

In each of the weld joints of Nos. 6 to 8, 10 to 12, 17 to 19, 22 to 24, 27 to 29, 32 to 34, and 38 to 40, at least one selected from the rotation width a, the rotation frequency f, and the flattening p of the laser beam fell outside the range of the present invention. Thus, the h/t value fell below 0.80.

The weld joint of No. 13, with a V/g value of less than 1.0, had a h/t value of less than 0.80. In contrast, the weld joints of Nos. 4, 9, 20, 25, 30, 35, and 41 all had excessive V/g values and thus the hit values were more than 1.20.

Table 1-1

| № | Laser Beam Welding Conditions | | | | | | | | | | | Evaluation Results of Weld Joint | | | | | Remarks |
|---|---|---|---|---|---|---|---|---|---|---|---|---|---|---|---|---|---|
| | Sheet Thick- ness t (mm) | Laser Out- put (kW) | Weld- ing Veloci- ty v (m/min) | Rota- tion Width a (mm) | Rotation Frequen- cy f (Hz) | Flatten- ing p (%) | Filler Supply Rate (m/min) | Filler Supply Amount V (mm$^3$/mi- n) | Widt- h G (mm) of Gap | Volume g (mm$^3$/mi- n) of Gap Between Steel Sheets to Be Welded | V/g | Thickness h (mm) of Central Portion in Width Direction of Weld Metal | h/t | Minimum Melting Width w (mm) of Weld Metal | Bul- ging Test Result | Ten- sile Test Result | |
| 1 | 0.3 | 1 | 8.0 | 0.5 | 200 | 50 | 1.0 | 0.64 | 0.1 | 0.24 | 2.65 | 0.2 | 0.67 | 0.1 | Poor | Poor | Compara- tive Exam- ple |
| 2 | 0.6 | 1 | 8.0 | 0.5 | 200 | 50 | 2.0 | 1.27 | 0.1 | 0.48 | 2.65 | 0.6 | 1.00 | 0.3 | Good | Good | Invention Example |
| 3 | 0.6 | 1 | 10.0 | 0.5 | 200 | 50 | 2.0 | 1.27 | 0.1 | 0.60 | 2.12 | 0.5 | 0.83 | 0.1 | Poor | Poor | Compara- tive Exam- ple |
| 4 | 0.6 | 1 | 8.0 | 0.5 | 200 | 50 | 3.2 | 2.03 | 0.1 | 0.48 | 4.24 | 0.8 | 1.33 | 0.3 | Poor | Good | Compara- tive Exam- ple |
| 5 | 1.6 | 2 | 5.0 | 0.5 | 200 | 50 | 3.8 | 2.42 | 0.1 | 0.80 | 3.02 | 1.6 | 1.00 | 0.5 | Good | Good | Invention Example |
| 6 | 1.6 | 2 | 5.0 | 1.1 | 200 | 50 | 3.8 | 2.42 | 0.1 | 0.80 | 3.02 | 1.2 | 0.75 | 0.8 | Poor | Poor | Compara- tive Exam- ple |
| 7 | 1.6 | 2 | 5.0 | 0.5 | 500 | 50 | 3.8 | 2.42 | 0.1 | 0.80 | 3.02 | 1.2 | 0.75 | 0.5 | Poor | Poor | Compara- tive Exam- ple |
| 8 | 1.6 | 2 | 5.0 | 0.5 | 200 | 75 | 3.8 | 2.42 | 0.1 | 0.80 | 3.02 | 1.1 | 0.69 | 0.5 | Poor | Poor | Compara- tive Exam- ple |

| № | Laser Beam Welding Conditions | | | | | | | | | | | Evaluation Results of Weld Joint | | | | | Remarks |
|---|---|---|---|---|---|---|---|---|---|---|---|---|---|---|---|---|---|
| | Sheet Thickness t (mm) | Laser Output (kW) | Welding Velocity v (m/min) | Rotation Width a (mm) | Rotation Frequency f (Hz) | Flattening p (%) | Filler Supply Rate (m/min) | Filler Supply Amount V (mm³/min) | Width G (mm) of Gap | Volume g (mm³/min) of Gap Between Steel Sheets to Be Welded | V/g | Thickness h (mm) of Central Portion in Width Direction of Weld Metal | h/t | Minimum Melting Width w (mm) of Weld Metal | Bulging Test Result | Tensile Test Result | |
| 9 | 1.6 | 2 | 5.0 | 0.5 | 200 | 50 | 5.2 | 3.31 | 0.1 | 0.80 | 4.13 | 2.0 | 1.25 | 0.5 | Poor | Good | Comparative Example |
| 10 | 2.3 | 3 | 5.0 | 0 | 200 | 50 | 5.0 | 3.18 | 0.1 | 1.15 | 2.76 | 1.8 | 0.78 | 0.4 | Poor | Poor | Comparative Example |
| 11 | 2.3 | 3 | 5.0 | 0.5 | 45 | 50 | 5.0 | 3.18 | 0.1 | 1.15 | 2.76 | 1.8 | 0.78 | 0.5 | Poor | Poor | Comparative Example |
| 12 | 2.3 | 3 | 5.0 | 0.5 | 200 | 0 | 5.0 | 3.18 | 0.1 | 1.15 | 2.76 | 1.8 | 0.78 | 0.6 | Poor | Poor | Comparative Example |
| 13 | 2.3 | 3 | 5.0 | 0.5 | 200 | 50 | 1.6 | 1.02 | 0.1 | 1.15 | 0.88 | 1.7 | 0.74 | 0.7 | Poor | Poor | Comparative Example |
| 14 | 2.3 | 3 | 5.0 | 0.5 | 200 | 50 | 1.8 | 1.14 | 0.1 | 1.15 | 1.00 | 1.9 | 0.83 | 0.7 | Good | Good | Invention Example |
| 15 | 2.3 | 3 | 5.0 | 0.5 | 200 | 50 | 3.0 | 1.91 | 0.1 | 1.15 | 1.66 | 2.1 | 0.91 | 0.7 | Good | Good | Invention Example |
| 16 | 2.3 | 3 | 5.0 | 0.5 | 200 | 50 | 5.0 | 3.18 | 0.1 | 1.15 | 2.76 | 2.4 | 1.04 | 0.7 | Good | Good | Invention Example |
| 17 | 2.3 | 3 | 5.0 | 1.1 | 200 | 50 | 5.0 | 3.18 | 0.1 | 1.15 | 2.76 | 1.7 | 0.74 | 1.3 | Poor | Poor | Comparative Example |

| № | Laser Beam Welding Conditions | | | | | | | | | | | Evaluation Results of Weld Joint | | | | | Remarks |
|---|---|---|---|---|---|---|---|---|---|---|---|---|---|---|---|---|---|
| | Sheet Thickness t (mm) | Laser Output (kW) | Welding Velocity v (m/min) | Rotation Width a (mm) | Rotation Frequency f (Hz) | Flattening p (%) | Filler Supply Rate (m/min) | Filler Supply Amount V (mm$^3$/min) | Width G (mm) of Gap | Volume g (mm$^3$/min) of Gap Between Steel Sheets to Be Welded | V/g | Thickness h (mm) of Central Portion in Width Direction of Weld Metal | h/t | Minimum Melting Width w (mm) of Weld Metal | Bulging Test Result | Tensile Test Result | |
| 18 | 2.3 | 3 | 5.0 | 0.5 | 500 | 50 | 5.0 | 3.18 | 0.1 | 1.15 | 2.76 | 1.8 | 0.78 | 0.9 | Poor | Poor | Comparative Example |
| 19 | 2.3 | 3 | 5.0 | 0.5 | 200 | 75 | 5.0 | 3.18 | 0.1 | 1.15 | 2.76 | 1.8 | 0.78 | 1.0 | Poor | Poor | Comparative Example |
| 20 | 2.3 | 3 | 5.0 | 0.5 | 200 | 50 | 7.5 | 4.77 | 0.1 | 1.15 | 4.15 | 2.8 | 1.22 | 0.9 | Poor | Good | Comparative Example |

[Table 1-2]

| № | Laser Beam Welding Conditions | | | | | | | | | | | Evaluation Results of Weld Joint | | | | | Remarks |
|---|---|---|---|---|---|---|---|---|---|---|---|---|---|---|---|---|---|
| | Sheet Thickness t (mm) | Laser Output (kW) | Welding Velocity v (m/min) | Rotation Width a (mm) | Rotation Frequency f (Hz) | Flattening p (%) | Filler Supply Rate (m/min) | Filler Supply Amount V (mm$^3$/min) | Width G (mm) of Gap | Volume g (mm$^3$/min) of Gap Between Steel Sheets to Be Welded | V/g | Thickness h (mm) of Central Portion in Width Direction of Weld Metal | h/t | Minimum Melting Width w (mm) of Weld Metal | Bulging Test Result | Tensile Test Result | |
| 21 | 3.2 | 4 | 4.0 | 0.5 | 200 | 50 | 5.0 | 3.18 | 0.1 | 1.28 | 2.48 | 3.3 | 1.03 | 1.1 | Good | Good | Invention Example |
| 22 | 3.2 | 4 | 4.0 | 1.1 | 200 | 50 | 5.0 | 3.18 | 0.1 | 1.28 | 2.48 | 2.5 | 0.78 | 1.5 | Poor | Poor | Comparative Example |
| 23 | 3.2 | 4 | 4.0 | 0.5 | 500 | 50 | 5.0 | 3.18 | 0.1 | 1.28 | 2.48 | 2.4 | 0.75 | 1.0 | Poor | Poor | Comparative Example |
| 24 | 3.2 | 4 | 4.0 | 0.5 | 200 | 75 | 5.0 | 3.18 | 0.1 | 1.28 | 2.48 | 2.5 | 0.78 | 1.0 | Poor | Poor | Comparative Example |
| 25 | 3.2 | 4 | 4.0 | 0.5 | 200 | 50 | 8.2 | 5.21 | 0.1 | 1.28 | 4.07 | 4.0 | 1.25 | 1.1 | Poor | Good | Comparative Example |
| 26 | 4.5 | 6 | 3.0 | 0.5 | 200 | 50 | 4.5 | 2.86 | 0.1 | 1.35 | 2.12 | 4.4 | 0.98 | 1.5 | Good | Good | Invention Example |
| 27 | 4.5 | 6 | 3.0 | 1.1 | 200 | 50 | 4.5 | 2.86 | 0.1 | 1.35 | 2.12 | 3.5 | 0.78 | 2.0 | Poor | Poor | Comparative Example |
| 28 | 4.5 | 6 | 3.0 | 0.5 | 500 | 50 | 4.5 | 2.86 | 0.1 | 1.35 | 2.12 | 3.5 | 0.78 | 1.6 | Poor | Poor | Comparative Example |

EP 4 461 455 A1

| № | Laser Beam Welding Conditions | | | | | | | | | | | Evaluation Results of Weld Joint | | | | | Remarks |
|---|---|---|---|---|---|---|---|---|---|---|---|---|---|---|---|---|---|
| | Sheet Thickness t (mm) | Laser Output (kW) | Welding Velocity v (m/min) | Rotation Width a (mm) | Rotation Frequency f (Hz) | Flattening p (%) | Filler Supply Rate (m/min) | Filler Supply Amount V (mm$^3$/min) | Width G (mm) of Gap | Volume g (mm$^3$/min) of Gap Between Steel Sheets to Be Welded | V/g | Thickness h (mm) of Central Portion in Width Direction of Weld Metal | h/t | Minimum Melting Width w (mm) of Weld Metal | Bulging Test Result | Tensile Test Result | |
| 29 | 4.5 | 6 | 3.0 | 0.5 | 200 | 75 | 4.5 | 2.86 | 0.1 | 1.35 | 2.12 | 3.4 | 0.76 | 1.7 | Poor | Poor | Comparative Example |
| 30 | 4.5 | 6 | 3.0 | 0.5 | 200 | 50 | 8.8 | 5.60 | 0.1 | 1.35 | 4.14 | 5.5 | 1.22 | 1.5 | Poor | Good | Comparative Example |
| 31 | 6.4 | 8 | 2.0 | 0.5 | 200 | 50 | 4.0 | 2.54 | 0.1 | 1.28 | 1.99 | 6.5 | 1.02 | 2.1 | Good | Good | Invention Example |
| 32 | 6.4 | 8 | 2.0 | 1.1 | 200 | 50 | 4.0 | 2.54 | 0.1 | 1.28 | 1.99 | 4.9 | 0.77 | 2.8 | Poor | Poor | Comparative Example |
| 33 | 6.4 | 8 | 2.0 | 0.5 | 500 | 50 | 4.0 | 2.54 | 0.1 | 1.28 | 1.99 | 5.0 | 0.78 | 2.2 | Poor | Poor | Comparative Example |
| 34 | 6.4 | 8 | 2.0 | 0.5 | 200 | 75 | 4.0 | 2.54 | 0.1 | 1.28 | 1.99 | 5.0 | 0.78 | 2.3 | Poor | Poor | Comparative Example |
| 35 | 6.4 | 8 | 2.0 | 0.5 | 200 | 50 | 8.4 | 5.34 | 0.1 | 1.28 | 4.17 | 7.9 | 1.23 | 2.2 | Poor | Good | Comparative Example |
| 36 | 8.0 | 10 | 0.7 | 0.5 | 200 | 50 | 3.0 | 1.91 | 0.1 | 0.56 | 3.41 | 6.0 | 0.75 | 3.0 | Poor | Poor | Comparative Example |

EP 4 461 455 A1

| № | Laser Beam Welding Conditions | | | | | | | | | | | Evaluation Results of Weld Joint | | | | | Remarks |
|---|---|---|---|---|---|---|---|---|---|---|---|---|---|---|---|---|---|
| | Sheet Thickness t (mm) | Laser Output (kW) | Welding Velocity v (m/min) | Rotation Width a (mm) | Rotation Frequency f (Hz) | Flattening p (%) | Filler Supply Rate (m/min) | Filler Supply Amount V (mm$^3$/min) | Width G (mm) of Gap | Volume g (mm$^3$/min) of Gap Between Steel Sheets to Be Welded | V/g | Thickness h (mm) of Central Portion in Width Direction of Weld Metal | h/t | Minimum Melting Width w (mm) of Weld Metal | Bulging Test Result | Tensile Test Result | |
| 37 | 8.0 | 10 | 1.0 | 0.5 | 200 | 50 | 3.0 | 1.91 | 0.1 | 0.80 | 2.38 | 8.2 | 1.03 | 2.7 | Good | Good | Invention Example |
| 38 | 8.0 | 10 | 1.0 | 1.1 | 200 | 50 | 3.0 | 1.91 | 0.1 | 0.80 | 2.38 | 4.9 | 0.61 | 3.7 | Poor | Poor | Comparative Example |
| 39 | 8.0 | 10 | 1.0 | 0.5 | 500 | 50 | 3.0 | 1.91 | 0.1 | 0.80 | 2.38 | 6.1 | 0.76 | 2.9 | Poor | Poor | Comparative Example |
| 40 | 8.0 | 10 | 1.0 | 0.5 | 200 | 75 | 3.0 | 1.91 | 0.1 | 0.80 | 2.38 | 6.2 | 0.78 | 2.9 | Poor | Poor | Comparative Example |
| 41 | 8.0 | 10 | 1.0 | 0.5 | 200 | 50 | 5.4 | 3.43 | 0.1 | 0.80 | 4.29 | 9.8 | 1.23 | 2.7 | Poor | Good | Comparative Example |
| 42 | 10.8 | 10 | 0.9 | 0.5 | 200 | 50 | 3.0 | 1.91 | 0.1 | 0.97 | 1.96 | 10.9 | 1.01 | 0.1 | Poor | Poor | Comparative Example |

EP 4 461 455 A1

Industrial Applicability

The technology of the present invention is applicable to not only a case where the rear end of the preceding steel sheet and the front end of the following steel sheet are butt-welded together on the entry side of a continuous processing line for the steel sheets, but also a case where different types of steel sheets or steel sheets with different thicknesses are welded together to produce a tailored blank.

Reference Signs List

1 laser oscillator
2 transmission system
3 working head
4 gap between steel sheets
5 filler
6 filler supply device
7, 7a, 7b detector that detects width of gap
8 computing unit
9 weld metal (weld)
10a, 10b mirror
L laser beam
S 1, S2 steel sheet
a width (i.e., rotation width) of arc drawn by laser beam in direction at right angles to welding direction
b width of arc drawn by laser beam in welding direction
d welding direction
G width of gap between steel sheets
h thickness of central portion in width direction of weld metal
w minimum melting width in thickness direction of weld metal

**Claims**

1.  A laser beam welding method of irradiating a gap between butted steel sheets with a laser beam while supplying filler to the gap, causing the butted portion of the steel sheets and the filler to melt and solidify, forming a weld metal, and thereby melting and joining the butted steel sheets,
    **characterized in that** the method comprises

    delivering the laser beam while rotating the laser beam so as to cross the gap between the steel sheets and controlling an amount of the filler supplied to the gap per unit time such that the amount is in a predetermined range with respect to a volume of a gap between the steel sheets to be welded per unit time.

2.  The laser beam welding method according to claim 1, wherein
    welding is performed so as to satisfy all of the following conditions (1) to (6) and thereby forming the weld metal that satisfies the following conditions (7) and (8):

$$(1)\ 0.4 \leq t \leq 10.0,$$

$$(2)\ 0.80 \leq v \leq 8.0,$$

$$(3)\ 0 < a \leq 1.0,$$

$$(4)\ 50 \leq f \leq 400,$$

$$(5)\ 0 < p \le 70,$$

$$(6)\ 1.0 \le V/g \le 4.0,$$

$$(7)\ 0.80 \le h/t \le 1.20,$$

and

$$(8)\ 0.2 \le w \le 3.0,$$

where t represents a thickness (mm) of each steel sheet, v represents a welding velocity (m/min), a represents a rotation width (mm) of the laser beam, f represents a rotation frequency (Hz) of the laser beam, p represents a flattening (%) of a circle drawn by the laser beam while the laser beam is rotated, V represents the supply amount ($mm^3$/min) of the filler per unit time, g represents the volume ($mm^3$/min) of the gap between the steel sheets to be welded per unit time, h represents a thickness (mm) of a central portion of a weld, and w represents a minimum melting width (mm) in a thickness direction of a weld.

3. A laser beam welding machine for melting and joining butted steel sheets, comprising

a laser oscillator that oscillates a laser beam;
a transmission system that transmits the laser beam;
a working head that delivers the laser beam while rotating the laser beam to cross a gap between the steel sheets;
a filler supply device that supplies filler to the gap;
a detector that detects a butting position of the butted steel sheet, and a width of a gap between the steel sheets; and
a control unit that controls an amount of the filler to be supplied from the filler supply device to the gap between the steel sheets,
**characterized in that**
the control unit has a function for controlling the amount of the filler supplied from the filler supply device such that the amount falls within a predetermined range in accordance with the volume of the gap between the steel sheets to be welded per unit time that has been calculated from a welding velocity and from the width of the gap detected by the detector.

4. A laser-beam butt-welded joint of steel sheets each having a thickness of 0.4 to 10.0 mm,
**characterized in that**

a weld of the laser-beam butt-welded joint has a weld metal including the steel sheets and filler, and
a thickness h of a central portion in a width direction of the weld metal and a minimum melting width w in a thickness direction of the weld metal satisfy the following conditions (7) and (8), respectively:

$$(7)\ 0.80 \le h/t \le 1.20,$$

and

$$(8)\ 0.2 \le w \le 3.0$$

## FIG. 1(a)

## FIG. 1(b)

Portion A

FIG. 2

FIG. 3(a)

FIG. 3(b)

FIG. 4

G

S1    4    23

FIG. 5

9

h

S1    W    S2

# INTERNATIONAL SEARCH REPORT

| International application No. |
| --- |
| **PCT/JP2022/037432** |

**A.    CLASSIFICATION OF SUBJECT MATTER**

*B23K 26/21*(2014.01)i; *B23K 26/082*(2014.01)i; *B23K 26/342*(2014.01)i
FI:    B23K26/21 F; B23K26/082; B23K26/342

According to International Patent Classification (IPC) or to both national classification and IPC

**B.    FIELDS SEARCHED**

Minimum documentation searched (classification system followed by classification symbols)

B23K26/21; B23K26/082; B23K26/342

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 181793/1985 (Laid-open No. 097389/1986) (TOYOTA MOTOR CORP.) 23 June 1986 (1986-06-23), p. 4, line 7 to p. 10, line 15, fig. 1-6 | 1-4 |
| Y | JP 08-257774 A (NIPPON STEEL CORP.) 08 October 1996 (1996-10-08) paragraph [0006], fig. 2 (b) | 1-4 |
| A | JP 2003-170284 A (KOMATSU LTD.) 17 June 2003 (2003-06-17) entire text, all drawings | 1-4 |
| A | JP 04-238680 A (NIPPON STEEL CORP.) 26 August 1992 (1992-08-26) entire text, all drawings | 1-4 |
| A | Microfilm of the specification and drawings annexed to the request of Japanese Utility Model Application No. 037091/1986 (Laid-open No. 151087/1987) (TOSHIBA CORP.) 25 September 1987 (1987-09-25), entire text, all drawings | 1-4 |

☐ Further documents are listed in the continuation of Box C.    ☑ See patent family annex.

| | |
| --- | --- |
| \*    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **06 December 2022** | **20 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/037432**

| Patent document cited in search report | | | Publication date (day/month/year) | Patent family member(s) | Publication date (day/month/year) |
|---|---|---|---|---|---|
| JP | 61-097389 | U1 | 23 June 1986 | (Family: none) | |
| JP | 08-257774 | A | 08 October 1996 | (Family: none) | |
| JP | 2003-170284 | A | 17 June 2003 | (Family: none) | |
| JP | 04-238680 | A | 26 August 1992 | (Family: none) | |
| JP | 62-151087 | U1 | 25 September 1987 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001205432 A
- JP 3133587 A
- JP 8290281 A
- JP 2014205166 A
- JP 2019171425 A
- WO 2020179029 A
- JP 2003170284 A